(19) Europäisches Patentamt / European Patent Office / Office européen des brevets

(11) EP 4 631 982 B1

(12) EUROPEAN PATENT SPECIFICATION

(45) Date of publication and mention of the grant of the patent: **26.08.2026 Bulletin 2026/35**

(21) Application number: **24865865.0**

(22) Date of filing: **12.09.2024**

(51) International Patent Classification (IPC): ***C08F 32/08*** $^{(2006.01)}$ ***C08F 232/08*** $^{(2006.01)}$ ***C08G 61/12*** $^{(2006.01)}$ ***G02B 1/04*** $^{(2006.01)}$ ***C08F 220/10*** $^{(2006.01)}$ ***C08F 222/40*** $^{(2006.01)}$ ***C09D 165/00*** $^{(2006.01)}$ ***C08L 65/00*** $^{(2006.01)}$ ***C08G 61/08*** $^{(2006.01)}$

(52) Cooperative Patent Classification (CPC): (C-Sets available) **C08G 61/08; C08F 222/40; C08L 65/00; C09D 165/00;** C08G 2261/332; C08G 2261/418 (Cont.)

(86) International application number: **PCT/KR2024/013880**

(87) International publication number: **WO 2025/058426 (20.03.2025 Gazette 2025/12)**

# (54) COMPOSITION FOR POLYMERIZING HIGH REFRACTIVE RESIN, HIGH REFRACTIVE RESIN, AND ARTICLE COMPRISING SAME

ZUSAMMENSETZUNG ZUR POLYMERISIERUNG VON HARZ MIT HOHEM BRECHUNGSINDEX, HARZ MIT HOHEM BRECHUNGSINDEX UND ARTIKEL DAMIT

COMPOSITION POUR LA POLYMÉRISATION D'UNE RÉSINE À RÉFRACTION ÉLEVÉE, RÉSINE À RÉFRACTION ÉLEVÉE ET ARTICLE LA COMPRENANT

(84) Designated Contracting States: **AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.09.2023 KR 20230120901**
**11.09.2024 KR 20240124003**

(43) Date of publication of application: **15.10.2025 Bulletin 2025/42**

(73) Proprietor: **LG CHEM, LTD.** **Seoul 07336 (KR)**

(72) Inventors:
- **CHOI, Il Hwan** **Daejeon 34122 (KR)**
- **YOO, Seungmin** **Daejeon 34122 (KR)**
- **LEE, Seungmook** **Daejeon 34122 (KR)**
- **BAE, Jaesoon** **Daejeon 34122 (KR)**
- **BAEK, Hyeonwoo** **Daejeon 34122 (KR)**
- **YIM, Hye Jin** **Daejeon 34122 (KR)**

(74) Representative: **Hoffmann Eitle Patent- und Rechtsanwälte PartmbB Arabellastraße 30 81925 München (DE)**

(56) References cited:
**CN-A- 105 103 042**
**JP-A- 2011 184 623**
**JP-B2- 7 233 158**
**KR-A- 20210 021 716**
**KR-A- 950 008 514**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **VRETIK, L. ET AL.: "New strategy in development of liquid crystal photoaligning materials with reactive C= C bonds", LIQUID CRYSTALLINE ORGANIC COMPOUNDS AND POLYMERS AS MATERIALS OF THE XXI CENTURY: FROM SYNTHESIS TO APPLICATIONS, 2011, pages 153 - 190, XP093290769**
- **LOU, L. ET AL.: "A novel copolymer of methyl methacrylate with N-pentafluorophenyl maleimide: High glass transition temperature and highly transparent polymer", POLYMER, vol. 52, 2011, pages 3560 - 3564, XP028236821, DOI: 10.1016/j.polymer.2011.05.032**
- **NISHIMORI, K. ET AL.: "Design of a maleimide monomer to achieve precise sequence control and functionalization for an alternating copolymer with vinylphenol", POLYMER JOURNAL, vol. 52, 2020, pages 717 - 729, XP037168355, DOI: 10.1038/s41428-020-0326-9**



(52) Cooperative Patent Classification (CPC): (Cont.)

C-Sets
**G02B 1/041, C08L 45/00;**
C08F 222/40, C08F 216/14, C08F 222/402, C08F 232/08

## Description

[Technical Field]

The present specification relates to a composition for polymerizing a high refractive index resin, a high refractive index resin, and an article including the same.

The present specification claims priority to and the benefit of Korean Patent Application Nos. 10-2023-0120901 and 10-2024-0124003 filed in the Korean Intellectual Property Office on September 12, 2023 and September 11, 2024, respectively.

[Background Art]

A high refractive index material is a material that has an excellent refractive power for photons, and means a dense medium in terms of photon transmission. Generally, glass has been used as a high refractive index material, but glass has the disadvantages of having low safety and a high specific gravity. Therefore, there is a need for developing transparent, soft polymer-based, and high refractive index materials.

A high refractive index resin, which is an example of the high refractive index material, may be used for optical members that require anti-reflection effect, light scattering effect, or light extraction effect, for example, it may be used for optical plastic lenses; high-precision lenses for optical disc recording such as CDs or DVDs; prisms; optical fibers; light guide plates; optical adhesives or pressure sensitive adhesives; sealing materials for optical semiconductors; or functional materials applied to plasma display panels (PDPs) or liquid crystal displays (LCDs), such as, anti-reflection films, light scattering films, viewing angle improving films, brightness improving films, or optical filters. Further, the high refractive index resin may also be used for an additive for preventing deterioration of plastics, an additive for cosmetics, or window glass for vehicles.

In addition, the higher the refractive index of an optical material, the thinner the optical lens required to achieve the same level of correction. Accordingly, as the refractive index of the optical material is increased, a thinner and lighter lens can be manufactured, so that it is possible to make various devices, where lenses are used, smaller. High refractive index materials provide versatility in lens design and their use is gradually increasing.

Therefore, research has been actively conducted on high refractive index materials capable of implementing excellent performance while having a thin thickness which may be used in small electronic devices.

[Related Art Documents]

(Patent Document 1) Korean Patent Application Publication No. 2016-0067229
(Patent Document 2) Publication No. JP 7 233158 B2 (TOSOH CORP) 6 March 2023
Patent Document 2 describes polymerizable resin compositions for producing high refractive index materials.

[Detailed Description of the Invention]

[Technical Problem]

The present specification has been made in an effort to provide a composition for polymerizing a high refractive index resin, a high refractive index resin, and an article including the same.

[Technical Solution]

An exemplary embodiment of the present specification provides a composition for polymerizing a high refractive index resin, including: a first compound represented by the following Chemical Formula 1; and one or more types of a second compound represented by the following Chemical Formula 2 and a third compound represented by the following Chemical Formula 3.

[Chemical Formula 1]

[Chemical Formula 2]

X
Z
R2

[Chemical Formula 3]

O
O
N
R3

In Chemical Formulae 1 to 3,

R1 is an alkyl group unsubstituted or substituted with an aryl group or a heteroaryl group; a cycloalkyl group unsubstituted or substituted with an alkyl group; or an aryl group,
R2 and R3 are each independently an alkyl group unsubstituted or substituted with an aryl group or a heteroaryl group; a cycloalkyl group unsubstituted or substituted with an alkyl group; or an aryl group,
Z is a direct bond; -O-; or -COO-, and
X is hydrogen; or an alkyl group.

Another exemplary embodiment of the present specification provides a high refractive index resin including: a first unit represented by the following Chemical Formula 11; and one or more of a second unit represented by the following Chemical Formula 12 and a third unit represented by the following Chemical Formula 13.

[Chemical Formula 11]

[Chemical Formula 12]

[Chemical Formula 13]

In Chemical Formulae 11 to 13,

* means a moiety linked to the main chain of the resin,
R11 is an alkyl group unsubstituted or substituted with an aryl group or a heteroaryl group; a cycloalkyl group unsubstituted or substituted with an alkyl group; or an aryl group,
R21 and R31 are each independently an alkyl group unsubstituted or substituted with an aryl group or a heteroaryl group; a cycloalkyl group unsubstituted or substituted with an alkyl group; or an aryl group,
Z1 is a direct bond; -O-; or -COO-, and
X1 is hydrogen; or an alkyl group.

Still another exemplary embodiment of the present specification provides an article including the high refractive index resin.

[Advantageous Effects]

As the composition for polymerizing a high refractive index resin according to an exemplary embodiment of the

present specification is used as a material for polymerizing a high refractive index resin to provide a high refractive index resin having a high refractive index, it is possible to provide a small optical material having excellent optical characteristics while having a thin thickness.

The resin (polymer) produced using the composition used in the present invention has a non-aromatic main chain and a three-dimensional amorphous structure (first unit) other than a plane, and thus, exhibits excellent birefringence characteristics.

Furthermore, by including a second unit or third unit different from the first unit, it is possible to provide high refractive index resins of various structures having excellent optical characteristics.

[Best Mode]

Hereinafter, the present specification will be described in more detail.

When one part "includes" one constituent element in the present specification, unless otherwise specifically described, this does not mean that another constituent element is excluded, but means that another constituent element may be further included.

In the present specification, the term "substitution" means that a hydrogen atom bonded to a carbon atom or nitrogen atom of a compound is changed into another substituent, and a position to be substituted is not limited as long as the position is a position at which the hydrogen atom is substituted, that is, a position at which the substituent can be substituted, and when two or more substituents are substituted, the two or more substituents may be the same as or different from each other.

In the present specification, "substituted with A" means being substituted with one or more A's, or substituted with one or more types of A's, unless particularly limited. For example, being substituted with an alkyl group includes both the case of being substituted with one alkyl group and the case of being substituted with a plurality of alkyl groups, and specific examples thereof include both the case where it is substituted with one or more methyl groups and the case where it is substituted with a methyl group and an ethyl group.

In the present specification, the term "unit" means a portion of a structure included in the main chain of a polymer, may be included repeatedly one or more times in a polymer, and may be used interchangeably with "repeating unit."

In the present specification, * means a moiety linked to the main chain of the resin.

In the present specification, an alkyl group may be a straight-chained or branched alkyl group, and the number of carbon atoms thereof may be 1 to 60. Specific examples of the alkyl group include a methyl group, an ethyl group, a propyl group, an n-propyl group, an isopropyl group, a butyl group, an n-butyl group, an isobutyl group, a tert-butyl group, a sec-butyl group, a pentyl group, an n-pentyl group, an isopentyl group, a neopentyl group, a tert-pentyl group, a hexyl group, an n-hexyl group, an isohexyl group, a heptyl group, an n-heptyl group, an octyl group, an n-octyl group, a tert-octyl group, an n-nonyl group, a 1-ethyl-propyl group, a 1,1-dimethyl-propyl group, a 1-methyl-butyl group, a 1-ethyl-butyl group, a 2-ethyl-butyl group, a 3,3-dimethyl-butyl group, a 1-methyl-pentyl group, a 2-methyl-pentyl group, a 4-methyl-2-pentyl group, a 2-propyl-pentyl group, a 1-methyl-hexyl group, a 4-methyl-hexyl group, a 5-methyl-hexyl group, a 2-ethyl-hexyl group, a 1-methyl-heptyl group, a 2,2-dimethyl-heptyl group, and the like, but are not limited thereto.

In the present specification, a cycloalkyl group may be a monocyclic or polycyclic cycloalkyl group, and the number of carbon atoms thereof may be 3 to 60. Specifically, a cycloalkyl group may be a monocyclic cycloalkyl group such as a cyclopropyl group, a cyclobutyl group, a cyclopentyl group, a cyclohexyl group, a cycloheptyl group, and a cycloheptyl group, and a polycyclic cycloalkyl group such as an adamantane-yl group and a norbornane-yl group, and the like, but is not limited thereto.

In the present specification, an aryl group may be a monocyclic or polycyclic aryl group, and the number of carbon atoms thereof may be 6 to 60. The monocyclic aryl group means an aryl group consisting of a single ring aryl group, and the number of carbon atoms thereof may be 6 to 30. Specific examples of the monocyclic aryl group include a phenyl group, a biphenyl group, a terphenyl group, and the like, but are not limited thereto. In the case of a polycyclic aryl group, the number of carbon atoms thereof may be 10 to 30, and specific examples thereof include a naphthyl group, anthracenyl group, a phenanthrenyl group, a triphenylenyl group, a pyrenyl group, a phenalenyl group, a perylenyl group, a chrysenyl group, a fluorenyl group, and the like, but are not limited thereto.

In the present specification, a heteroaryl group includes one or more atoms other than carbon, that is, one or more heteroatoms, and specifically, the heteroatom includes one or more atoms selected from the group consisting of O, S, N, Se, and the like. The heteroaryl group may have 2 to 60 carbon atoms and may be monocyclic or polycyclic. Examples of the heteroaryl group include a thiophene group, a furan group, a dibenzofuran group, a dibenzothiophene group, a benzothiophene group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, and the like, but are not limited thereto.

The composition for polymerizing a high refractive index resin according to an exemplary embodiment of the present specification includes: a first compound represented by the following Chemical Formula 1; and one or more types of a second compound represented by the following Chemical Formula 2 and a third compound represented by the following Chemical Formula 3.

[Chemical Formula 1]

[Chemical Formula 2]

X
Z
R2

[Chemical Formula 3]

O
N
O
R3

In Chemical Formulae 1 to 3,

R1 is an alkyl group unsubstituted or substituted with an aryl group or a heteroaryl group; a cycloalkyl group unsubstituted or substituted with an alkyl group; or an aryl group,
R2 and R3 are each independently an alkyl group unsubstituted or substituted with an aryl group or a heteroaryl group; a cycloalkyl group unsubstituted or substituted with an alkyl group; or an aryl group,
Z is a direct bond; -O-; or -COO-, and
X is hydrogen; or an alkyl group.

When the composition for polymerizing a high refractive index resin is polymerized, polymerization occurs at the norbornene ring of Chemical Formula 1. That is, the resin produced by polymerizing the composition for polymerizing a

high refractive index resin may include a unit derived from the compound represented by Chemical Formula 1 in the main chain rather than in the side chain, thereby providing a high refractive index resin having excellent optical characteristics while having a thin thickness.

Further, the resin has a non-aromatic main chain and a three-dimensional amorphous structure other than a plane, and thus, exhibits excellent birefringence characteristics.

In addition, the composition for polymerizing a high refractive index resin further includes the compound represented by Chemical Formula 2 and 3, so that it is possible to provide high refractive index resins of various structures having excellent optical characteristics while having a thin thickness.

When a high refractive index resin is prepared by including only the first compound, there is a problem in that polymerization is not achieved because the molecular weight is 1,000 or less.

In the present specification, the composition for polymerizing a high refractive index resin may be a monomer composition.

In an exemplary embodiment of the present specification, R1 may be a C1 to C10 alkyl group unsubstituted or substituted with an aryl group or a heteroaryl group; a C3 to C20 cycloalkyl group unsubstituted or substituted with an alkyl group; or a C6 to C30 aryl group.

In an exemplary embodiment of the present specification, R1 may be a methyl group unsubstituted or substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

In an exemplary embodiment of the present specification, R1 may be a C1 to C10 alkyl group unsubstituted or substituted with a C6 to C30 aryl group or a C2 to C30 heteroaryl group; a C3 to C20 cycloalkyl group unsubstituted or substituted with a C1 to C20 alkyl group; or a C6 to C30 aryl group.

In an exemplary embodiment of the present specification, R1 may be a C1 to C10 alkyl group unsubstituted or substituted with a C6 to C20 aryl group or a C2 to C20 heteroaryl group; a C3 to C20 cycloalkyl group unsubstituted or substituted with a C1 to C10 alkyl group; or a C6 to C30 aryl group.

When R1 is substituted with a heteroaryl group, the heteroaryl group may include N, and may specifically be a carbazole group.

In an exemplary embodiment of the present specification, R1 may be a methyl group unsubstituted or substituted with a C6 to C30 aryl group or a C2 to C30 heteroaryl group; a cyclopentyl group unsubstituted or substituted with a C1 to C20 alkyl group; a cyclohexyl group unsubstituted or substituted with a C1 to C20 alkyl group; a phenyl group; a biphenyl group; a naphthyl group; or a fluorenyl group.

In an exemplary embodiment of the present specification, R1 may be a methyl group unsubstituted or substituted with a C6 to C20 aryl group or a C2 to C20 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R1 may be a methyl group unsubstituted or substituted with a C6 to C20 aryl group or a C2 to C20 heteroaryl group; a cyclopentyl group unsubstituted or substituted with a C1 to C5 alkyl group; a cyclohexyl group unsubstituted or substituted with a C1 to C5 alkyl group; a phenyl group; a biphenyl group; a naphthyl group; or a fluorenyl group.

In an exemplary embodiment of the present specification, R1 may be a methyl group unsubstituted or substituted with a phenyl group, an anthracenyl group, or a carbazole group; a cyclopentyl group unsubstituted or substituted with a methyl group; a cyclohexyl group unsubstituted or substituted with a methyl group; a phenyl group; a biphenyl group; a naphthyl group; or a fluorenyl group.

In an exemplary embodiment of the present specification, the first compound may be any one selected from the following compounds.

In an exemplary embodiment of the present specification, the content of the first compound with respect to 100 parts by weight of the entire composition for polymerizing a high refractive index resin may be 1 part by weight or more, 2 parts by weight or more, 3 parts by weight or more, 4 parts by weight or more, 5 parts by weight or more, or 6 parts by weight or more, and 95 parts by weight or less, 90 parts by weight or less, 70 parts by weight or less, 50 parts by weight or less, 40 parts by weight or less, 30 parts by weight or less, 20 parts by weight or less, 10 parts by weight or less, or 8 parts by weight or less.

In an exemplary embodiment of the present specification, the content of the first compound with respect to 100 parts by mole of the entire composition for polymerizing a high refractive index resin may be 1 part by mole or more, 2 parts by mole or more, 3 parts by mole or more, or 4 parts by mole or more, and 50 parts by mole or less, 40 parts by mole or less, 30 parts by mole or less, 20 parts by mole or less, 10 parts by mole or less, 9 parts by mole or less, 8 parts by mole or less, 7 parts by mole or less, 6 parts by mole or less, or 5 parts by mole or less.

In the parts by weight and parts by mole, 100 parts by weight or 100 parts by mole of the entire composition for polymerizing a high refractive index resin means 100 parts by weight or 100 parts by mole of the entire monomer composition for polymerizing a high refractive index resin. That is, 100 parts by weight or 100 parts by mole of the entire composition for polymerizing a high refractive index resin is based on the case where a solvent and a catalyst are not included.

Within the above content range, there is an effect in that the higher the content of the compound represented by Chemical Formula 1, the higher the refractive index of the resin becomes, and the better the thermal stability, shrinkage rate, glass transition temperature and heat resistance become.

In an exemplary embodiment of the present specification, the composition for polymerizing a high refractive index resin includes one or more types of the second compound and the third compound.

In an exemplary embodiment of the present specification, the composition for polymerizing a high refractive index resin includes the second compound and the third compound.

In an exemplary embodiment of the present specification, the composition for polymerizing a high refractive index

resin includes: the second compound; and one or more types of the third compounds.

In an exemplary embodiment of the present specification, the composition for polymerizing a high refractive index resin includes: one type of the second compound; and one or more types of the third compound.

In an exemplary embodiment of the present specification, the composition for polymerizing a high refractive index resin includes: one type of the second compound; and one or two types of the third compound.

In an exemplary embodiment of the present specification, the composition for polymerizing a high refractive index resin includes: one type of the second compound; and two types of the third compound.

In an exemplary embodiment of the present specification, R2 and R3 may be each independently a C1 to C10 alkyl group unsubstituted or substituted with an aryl group or a heteroaryl group; a C3 to C20 cycloalkyl group unsubstituted or substituted with an alkyl group; or a C6 to C30 aryl group.

In an exemplary embodiment of the present specification, R2 and R3 may be each independently a methyl group unsubstituted or substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

In an exemplary embodiment of the present specification, R2 and R3 may be each independently a C1 to C10 alkyl group unsubstituted or substituted with a C6 to C30 aryl group or a C2 to C30 heteroaryl group; a C3 to C20 cycloalkyl group unsubstituted or substituted with a C1 to C10 alkyl group; or a C6 to C30 aryl group.

In an exemplary embodiment of the present specification, R2 and R3 may be each independently a C1 to C10 alkyl group unsubstituted or substituted with a C6 to C20 aryl group or a C2 to C20 heteroaryl group; a C3 to C20 cycloalkyl group unsubstituted or substituted with a C1 to C10 alkyl group; or a C6 to C30 aryl group.

In an exemplary embodiment of the present specification, R2 and R3 may be each independently a methyl group unsubstituted or substituted with a C6 to C30 aryl group or a C2 to C30 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R2 and R3 may be each independently a methyl group unsubstituted or substituted with a C6 to C20 aryl group or a C2 to C20 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R2 and R3 may be each independently a methyl group unsubstituted or substituted with a phenyl group, an anthracenyl group, or a carbazole group; a cyclopentyl group unsubstituted or substituted with a methyl group; a cyclohexyl group unsubstituted or substituted with one or more methyl groups; a phenyl group; a biphenyl group; a naphthyl group; or a fluorenyl group.

In an exemplary embodiment of the present specification, X may be hydrogen; or a C1 to C10 alkyl group.

In an exemplary embodiment of the present specification, X may be hydrogen; or a C1 to C5 alkyl group.

In an exemplary embodiment of the present specification, X may be hydrogen; a methyl group; or an ethyl group.

In an exemplary embodiment of the present specification, X may be hydrogen; or a methyl group.

In an exemplary embodiment of the present specification, Z may be -O-; or -COO-.

In an exemplary embodiment of the present specification, Z may be -O-.

In an exemplary embodiment of the present specification, the second compound may be any one selected from the following compounds.

In an exemplary embodiment of the present specification, the third compound may be any one selected from the following compounds.

In an exemplary embodiment of the present specification, the content of the second compound with respect to 100 parts by weight of the entire composition for polymerizing a high refractive index resin may be 1 part by weight or more, 3 parts by weight or more, 5 parts by weight or more, 7 parts by weight or more, 10 parts by weight or more, 12 parts by weight or more, 14 parts by weight or more, or 15 parts by weight or more, and 90 parts by weight or less, 70 parts by weight or less, 50 parts by weight or less, 40 parts by weight or less, 30 parts by weight or less, 20 parts by weight or less, or 16 parts by weight or less.

In an exemplary embodiment of the present specification, the content of the second compound with respect to 100 parts by mole of the entire composition for polymerizing a high refractive index resin may be 1 part by mole or more, 5 parts by mole or more, 10 parts by mole or more, 15 parts by mole or more, 18 parts by mole or more, or 19 parts by mole or more, and 60 parts by mole or less, 50 parts by mole or less, 40 parts by mole or less, 30 parts by mole or less, 25 parts by mole or less, 22 parts by mole or less, or 21 parts by mole or less.

In an exemplary embodiment of the present specification, the content of the third compound with respect to 100 parts by weight of the entire composition for polymerizing a high refractive index resin may be 1 part by weight or more, 10 parts by weight or more, 30 parts by weight or more, 50 parts by weight or more, 60 parts by weight or more, 70 parts by weight or more, 75 parts by weight or more, 77 parts by weight or more, or 78 parts by weight or more, and 95 parts by weight or less, 90 parts by weight or less, 85 parts by weight or less, or 79 parts by weight or less.

In an exemplary embodiment of the present specification, the content of the third compound with respect to 100 parts by mole of the entire composition for polymerizing a high refractive index resin may be 1 part by mole or more, 10 parts by mole or more, 30 parts by mole or more, 50 parts by mole or more, 60 parts by mole or more, 70 parts by mole or more, 72 parts by mole or more, 74 parts by mole or more, or 75 parts by mole or more, and 90 parts by mole or less, 85 parts by mole or less, 80 parts by mole or less, 79 parts by mole or less, 78 parts by mole or less, 77 parts by mole or less, or 76 parts by mole or less.

The above content ranges mean the content of the entire third compound. For example, when two types of the third compound are used, the content of the entire two types falls within the above range. That is, when two types are used, the content of each of two types of the third compound is not particularly limited, as long as the above total content is satisfied.

In the parts by weight and parts by mole, 100 parts by weight or 100 parts by mole of the entire composition for polymerizing a high refractive index resin means 100 parts by weight or 100 parts by mole of the entire monomer composition for polymerizing a high refractive index resin. That is, 100 parts by weight or 100 parts by mole of the entire composition for polymerizing a high refractive index resin is based on the case where a solvent and a catalyst are not included.

The higher the content of the second compound and the third compound, the better the processability of the resin.

In an exemplary embodiment of the present specification, the composition for polymerizing a high refractive index resin may further include a fourth compound represented by the following Chemical Formula 4.

[Chemical Formula 4]

In Chemical Formula 4,
R4 and R5 are each independently an alkyl group unsubstituted or substituted with an aryl group or a heteroaryl group; a cycloalkyl group unsubstituted or substituted with an alkyl group; or an aryl group.

When the composition for polymerizing a high refractive index resin includes the fourth compound, it is possible to provide a high refractive index resin having various structures with excellent optical characteristics while having a thin thickness, and in particular, when the composition is used together with the compound of Chemical Formula 1, it is possible to provide a resin having excellent birefringence characteristics by having a non-aromatic main chain and a three-dimensional amorphous structure other than a plane.

In an exemplary embodiment of the present specification, R4 and R5 may be each independently a C1 to C10 alkyl group unsubstituted or substituted with an aryl group or a heteroaryl group; a C3 to C20 cycloalkyl group unsubstituted or substituted with an alkyl group; or a C6 to C30 aryl group.

In an exemplary embodiment of the present specification, R4 and R5 may be each independently a methyl group unsubstituted or substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

In an exemplary embodiment of the present specification, R4 and R5 may be each independently a C1 to C10 alkyl group unsubstituted or substituted with a C6 to C30 aryl group or a C2 to C30 heteroaryl group; a C3 to C20 cycloalkyl group unsubstituted or substituted with a C1 to C10 alkyl group; or a C6 to C30 aryl group.

In an exemplary embodiment of the present specification, R4 and R5 may be each independently a C1 to C10 alkyl group unsubstituted or substituted with a C6 to C20 aryl group or a C2 to C20 heteroaryl group; a C3 to C20 cycloalkyl group unsubstituted or substituted with a C1 to C10 alkyl group; or a C6 to C30 aryl group.

In an exemplary embodiment of the present specification, R4 and R5 may be each independently a methyl group unsubstituted or substituted with a C6 to C30 aryl group or a C2 to C30 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R4 and R5 may be each independently a methyl group unsubstituted or substituted with a C6 to C20 aryl group or a C2 to C20 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R4 and R5 may be each independently a methyl group unsubstituted or substituted with a phenyl group, an anthracenyl group, or a carbazole group; a cyclopentyl group unsubstituted or substituted with a methyl group; a cyclohexyl group unsubstituted or substituted with one or more methyl groups; a phenyl group; a biphenyl group; a naphthyl group; or a fluorenyl group.

In an exemplary embodiment of the present specification, the fourth compound may be any one selected from the following compounds.

In an exemplary embodiment of the present specification, the content of the fourth compound with respect to 100 parts by weight of the entire composition for polymerizing a high refractive index resin may be 1 part by weight or more, 2 parts by weight or more, 3 parts by weight or more, 4 parts by weight or more, or 5 parts by weight or more, and 30 parts by weight or less, 20 parts by weight or less, 10 parts by weight or less, 9 parts by weight or less, or 8 parts by weight or less.

Within the above range, the higher the content of the fourth compound, the better the refractive index and heat resistance of the resin.

In an exemplary embodiment of the present specification, the composition for polymerizing a high refractive index resin may be a solid at room temperature.

Another exemplary embodiment of the present invention provides a method for preparing a high refractive index resin, including polymerizing the above-mentioned composition for polymerizing a high refractive index resin.

In an exemplary embodiment of the present specification, the polymerizing of the composition for polymerizing a high refractive index resin may be solution polymerizing the composition for polymerizing a high refractive index resin.

In the solution polymerizing of the composition, any solution polymerization method known in the art may be used.

In an exemplary embodiment of the present specification, the polymerizing of the composition for polymerizing a high refractive index resin may include: dissolving the composition for polymerizing a high refractive index resin in a solvent to prepare a solution of the composition for polymerizing a high refractive index resin; dissolving the solution of the composition for polymerizing a high refractive index resin at 80°C in a nitrogen atmosphere; heating the solution of the dissolved composition for polymerizing a high refractive index resin to 120°C; adding a catalyst solution dropwise to the solution of the dissolved composition for polymerizing a high refractive index resin; and reacting the resulting mixture for 20 hours.

The catalyst may serve as a polymerization initiator for the composition for polymerizing a high refractive index resin. The position where polymerization occurs in the first compound may vary depending on the type of catalyst.

In an exemplary embodiment of the present specification, the catalyst may be a radical polymerization initiator.

In an exemplary embodiment of the present specification, the catalyst may be an azo compound.

In an exemplary embodiment of the present specification, the catalyst may be 1,1'-azobis(cyclohexanecarbonitrile) (ABCN) or 1,1'-azobisisobutyronitrile (AIBN).

In an exemplary embodiment of the present specification, the catalyst may be 1,1'-azobis(cyclohexanecarboni-

trile) (ABCN).

In an exemplary embodiment of the present specification, the amount of catalyst used with respect to 100 parts by weight of the entire composition for polymerizing a high refractive index resin may be 1 part by weight or more, 3 parts by weight or more, 6 parts by weight or more, 8 parts by weight or more, 10 parts by weight or more, 12 parts by weight or more, 13 parts by weight or more, or 14 parts by weight or more, and 20 parts by weight or less, 19 parts by weight or less, 18 parts by weight or less, 17 parts by weight or less, 16 parts by weight or less, or 15 parts by weight or less.

In an exemplary embodiment of the present specification, the amount of catalyst used with respect to 100 parts by mole of the entire composition for polymerizing a high refractive index resin may be 1 part by mole or more, 3 parts by mole or more, 5 parts by mole or more, 7 parts by mole or more, 8 parts by mole or more, or 9 parts by mole or more, and 20 parts by mole or less, 15 parts by mole or less, 13 parts by mole or less, 12 parts by mole or less, or 11 parts by mole or less.

In an exemplary embodiment of the present specification, the solvent is not limited as long as it can dissolve the composition for polymerizing a high refractive index resin.

In an exemplary embodiment of the present specification, the solvent may be xylene.

The solvent may be used in an appropriate amount such that the composition for polymerizing a high refractive index resin may be dissolved.

The high refractive index resin according to an exemplary embodiment of the present specification includes a first unit represented by the following Chemical Formula 11; and one or more types of a second unit represented by the following Chemical Formula 12 and a third unit represented by the following Chemical Formula 13.

[Chemical Formula 11]

O N O R11

[Chemical Formula 12]

X1 Z1 R21

[Chemical Formula 13]

In Chemical Formulae 11 to 13,

* means a moiety linked to the main chain of the resin,
R11 is an alkyl group unsubstituted or substituted with an aryl group or a heteroaryl group; a cycloalkyl group unsubstituted or substituted with an alkyl group; or an aryl group,
R21 and R31 are each independently an alkyl group unsubstituted or substituted with an aryl group or a heteroaryl group; a cycloalkyl group unsubstituted or substituted with an alkyl group; or an aryl group,
Z1 is a direct bond; -O-; or -COO-, and
X1 is hydrogen; or an alkyl group.

In an exemplary embodiment of the present specification, the first unit represented by Chemical Formula 11 is a unit derived from the first compound represented by Chemical Formula 1.

In an exemplary embodiment of the present specification, the second unit represented by Chemical Formula 12 is a unit derived from the second compound represented by Chemical Formula 2.

In an exemplary embodiment of the present specification, the third unit represented by Chemical Formula 13 is a unit derived from the third compound represented by Chemical Formula 3.

In other words, when a high refractive index resin is prepared by polymerizing the composition for polymerizing a high refractive index resin, polymerization occurs at the norbornene ring of Chemical Formula 1, so that a high refractive index resin including the first unit represented by Chemical Formula 11 in the main chain may be obtained.

The high refractive index resin including the unit represented by Chemical Formula 11 has a high refractive index compared to other types of resins, and has excellent optical characteristics while having a thin thickness, so the resin may be easily used in an article that requires a small optical material.

In an exemplary embodiment of the present specification, R11 may be a C1 to C10 alkyl group unsubstituted or substituted with an aryl group or a heteroaryl group; a C3 to C20 cycloalkyl group unsubstituted or substituted with an alkyl group; or a C6 to C30 aryl group.

In an exemplary embodiment of the present specification, R11 may be a methyl group unsubstituted or substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

In an exemplary embodiment of the present specification, R11 may be a C1 to C10 alkyl group unsubstituted or substituted with a C6 to C30 aryl group or a C2 to C30 heteroaryl group; a C3 to C20 cycloalkyl group unsubstituted or substituted with a C1 to C10 alkyl group; or a C6 to C30 aryl group.

In an exemplary embodiment of the present specification, R11 may be a C1 to C10 alkyl group unsubstituted or substituted with a C6 to C20 aryl group or a C2 to C20 heteroaryl group; a C3 to C20 cycloalkyl group unsubstituted or substituted with a C1 to C10 alkyl group; or a C6 to C30 aryl group.

In an exemplary embodiment of the present specification, R11 may be a methyl group unsubstituted or substituted with a C6 to C30 aryl group or a C2 to C30 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R11 may be a methyl group unsubstituted or substituted with a C6 to C20 aryl group or a C2 to C20 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R11 may be a methyl group unsubstituted or substituted with a phenyl group, an anthracenyl group, or a carbazole group; a cyclopentyl group unsubstituted or

substituted with a methyl group; a cyclohexyl group unsubstituted or substituted with one or more methyl groups; a phenyl group; a biphenyl group; a naphthyl group; or a fluorenyl group.

In an exemplary embodiment of the present specification, R21 and R31 may be each independently a C1 to C10 alkyl group unsubstituted or substituted with an aryl group or a heteroaryl group; a C3 to C20 cycloalkyl group unsubstituted or substituted with an alkyl group; or a C6 to C30 aryl group.

In an exemplary embodiment of the present specification, R21 and R31 may be each independently a methyl group unsubstituted or substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

In an exemplary embodiment of the present specification, R21 and R31 may be each independently a C1 to C10 alkyl group unsubstituted or substituted with a C6 to C30 aryl group or a C2 to C30 heteroaryl group; a C3 to C20 cycloalkyl group unsubstituted or substituted with a C1 to C10 alkyl group; or a C6 to C30 aryl group.

In an exemplary embodiment of the present specification, R21 and R31 may be each independently a C1 to C10 alkyl group unsubstituted or substituted with a C6 to C20 aryl group or a C2 to C20 heteroaryl group; a C3 to C20 cycloalkyl group unsubstituted or substituted with a C1 to C10 alkyl group; or a C6 to C30 aryl group.

In an exemplary embodiment of the present specification, R21 and R31 may be each independently a methyl group unsubstituted or substituted with a C6 to C30 aryl group or a C2 to C30 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R21 and R31 may be each independently a methyl group unsubstituted or substituted with a C6 to C20 aryl group or a C2 to C20 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R21 and R31 may be each independently a methyl group unsubstituted or substituted with a phenyl group, an anthracenyl group, or a carbazole group; a cyclopentyl group unsubstituted or substituted with a methyl group; a cyclohexyl group unsubstituted or substituted with one or more methyl groups; a phenyl group; a biphenyl group; a naphthyl group; or a fluorenyl group.

In an exemplary embodiment of the present specification, X1 may be hydrogen; or a C1 to C10 alkyl group.

In an exemplary embodiment of the present specification, X1 may be hydrogen; or a C1 to C5 alkyl group.

In an exemplary embodiment of the present specification, X1 may be hydrogen; a methyl group; or an ethyl group.

In an exemplary embodiment of the present specification, X1 may be hydrogen; or a methyl group.

In an exemplary embodiment of the present specification, Z1 may be -O-; or -COO-.

In an exemplary embodiment of the present specification, Z1 may be -O-.

In an exemplary embodiment of the present specification, the high refractive index resin may further include a fourth unit represented by the following Chemical Formula 14.

[Chemical Formula 14]

R41
N
O O
* *
O O
N
R51

In Chemical Formula 14,

R41 and R51 are each independently an alkyl group unsubstituted or substituted with an aryl group or a heteroaryl group; a cycloalkyl group unsubstituted or substituted with an alkyl group; or an aryl group.

In an exemplary embodiment of the present specification, the fourth unit represented by Chemical Formula 14 is a unit derived from the fourth compound represented by Chemical Formula 4.

In an exemplary embodiment of the present specification, R41 and R51 may be each independently a C1 to C10 alkyl group unsubstituted or substituted with an aryl group or a heteroaryl group; a C3 to C20 cycloalkyl group unsubstituted or substituted with an alkyl group; or a C6 to C30 aryl group.

In an exemplary embodiment of the present specification, R41 and R51 may be each independently a methyl group unsubstituted or substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

In an exemplary embodiment of the present specification, R41 and R51 may be each independently a C1 to C10 alkyl group unsubstituted or substituted with a C6 to C30 aryl group or a C2 to C30 heteroaryl group; a C3 to C20 cycloalkyl group unsubstituted or substituted with a C1 to C10 alkyl group; or a C6 to C30 aryl group.

In an exemplary embodiment of the present specification, R41 and R51 may be each independently a C1 to C10 alkyl group unsubstituted or substituted with a C6 to C20 aryl group or a C2 to C20 heteroaryl group; a C3 to C20 cycloalkyl group unsubstituted or substituted with a C1 to C10 alkyl group; or a C6 to C30 aryl group.

In an exemplary embodiment of the present specification, R41 and R51 may be each independently a methyl group unsubstituted or substituted with a C6 to C30 aryl group or a C2 to C30 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R41 and R51 may be each independently a methyl group unsubstituted or substituted with a C6 to C20 aryl group or a C2 to C20 heteroaryl group; a cyclopentyl group unsubstituted or substituted with a C1 to C10 alkyl group; a cyclohexyl group unsubstituted or substituted with a C1 to C10 alkyl group; a phenyl group; a biphenyl group; a naphthyl group; or a fluorenyl group.

In an exemplary embodiment of the present specification, R41 and R51 may be each independently a methyl group unsubstituted or substituted with a phenyl group, an anthracenyl group, or a carbazole group; a cyclopentyl group unsubstituted or substituted with a methyl group; a cyclohexyl group unsubstituted or substituted with one or more methyl groups; a phenyl group; a biphenyl group; a naphthyl group; or a fluorenyl group.

In an exemplary embodiment of the present specification, the high refractive index resin may be a random copolymer or a block copolymer.

In an exemplary embodiment of the present specification, the high refractive index resin may have a weight average molecular weight (Mw) of 20,000 g/mol or more, 22,000 g/mol or more, 24,000 g/mol or more, 26,000 g/mol or more, 28,000 g/mol or more, 29,000 g/mol or more, or 30,000 g/mol or more, and 500,000 g/mol or less, 400,000 g/mol or less, 300,000 g/mol or less, 200,000 g/mol or less, 100,000 g/mol or less, 80,000 g/mol or less, 60,000 g/mol or less, 50,000 g/mol or less, or 40,000 g/mol or less. When the high refractive index resin satisfies the above-described weight average molecular weight range, the high refractive index resin may have optimum fluidity and processability.

In an exemplary embodiment of the present specification, the high refractive index resin may have a number average molecular weight (Mn) of 3,000 g/mol or more, 4,000 g/mol or more, 5,000 g/mol or more, 5,500 g/mol or more, 6,000 g/mol or more, or 6,500 g/mol or more, and 100,000 g/mol or less, 80,000 g/mol or less, 70,000 g/mol or less, 60,000 g/mol or less, 50,000 g/mol or less, 40,000 g/mol or less, 30,000 g/mol or less, 20,000 g/mol or less, 10,000 g/mol or less, 9,000 g/mol or less, or 8,000 g/mol or less.

In the present specification, the weight average molecular weights (Mw) of the high refractive index resin may be measured by gel permeation chromatography (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 40°C, the used solvent is tetrahydrofuran (THF), and the flow rate is 1 mL/min. The sample of the resin is each prepared at a concentration of 10 mg/10 mL, and then fed in an amount of 10 μL, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

In an exemplary embodiment of the present specification, the refractive index of the high refractive index resin, measured at a wavelength of 587 nm, may be 1.56 or more, 1.57 or more, 1.58 or more, or 1.59 or more, and 1.90 or less, 1.85 or less, 1.80 or less, 1.75 or less, 1.70 or less, 1.65 or less, or 1.60 or less.

When the high refractive index resin satisfies the above refractive index, a thin and light optical lens can be manufactured when the resin is applied to a molded article such as an optical lens.

In an exemplary embodiment of the present specification, the Abbe's Number of the high refractive index resin, measured and calculated at a wavelength of 486 nm, 587 nm, and 656 nm may be 10 or more, 15 or more, 20 or more, 22 or

more, 25 or more, 26 or more, 27 or more, or 28 or more, and 40 or less, 35 or less, 33 or less, 32 or less, 31 or less, or 30 or less. When the high refractive index resin satisfies the above Abbe's Number range, there is an effect that the dispersion is decreased and the sharpness is increased when the high refractive index resin is applied to a molded article such as an optical lens.

The Abbe's Number may specifically be obtained by the following Equation by measuring the refractive index ($n_D$, $n_F$, and $n_C$) at a wavelength of D (587 nm), F (486 nm), and C (656 nm), respectively at 25°C.

$$\text{Abbe's Number} = (n_D - 1) / (n_F - n_C)$$

The refractive index can be measured by the prism couple method, and for example, SPA-3DR manufactured by SAIRON Technology Inc. may be used, but is not limited thereto.

The refractive index of the high refractive index resin may be calculated by measuring the change in the amount of light reflected from a prepared sample in which the resin is made to be flat by placing a slide glass on a heating plate at 200°C, using a prism coupler. When the prepared sample is brought into contact with the prism, and then the laser is incident on the prism, most of the incident laser is totally reflected, but when specific incident angle and conditions are satisfied, light is coupled because an evanescent field is generated at the boundary surface. By measuring an angle at which coupling occurs, and as a result, the intensity of the light detected by a detector sharply decreases, the refractive index of the film can be automatically calculated by the prism coupler from the parameters related to the polarization mode of light and the refractive indices of the prism and the substrate.

According to an exemplary embodiment of the present specification, the high refractive index resin may have a glass transition temperature (Tg) of 135°C or more, 136°C or more, 137°C or more, 138°C or more, 139°C or more, 140°C or more, 150°C or more, 160°C or more, or 170°C or more, and 200°C or less, 195°C or less, 190°C or less, 185°C or less, or 180°C or less. When the high refractive index resin satisfies the above glass transition temperature range, the resin has excellent heat resistance and injection property.

In the present specification, the glass transition temperature (Tg) may be measured by a differential scanning calorimeter (DSC). Specifically, the glass transition temperature may be measured from a graph obtained by heating 5.5 mg to 8.5 mg of the resin sample to 270°C under a nitrogen atmosphere, and then scanning the resin sample while heating the resin sample at a heating rate of 10°C/min during the second heating after cooling.

Further, another exemplary embodiment of the present specification provides an article including the high refractive index resin. The article may be a coating material, a curable material, a lens material, an optical substrate material, and the like, but is not limited thereto.

In an exemplary embodiment of the present specification, the article including the high refractive index resin may be an optical lens.

[Mode for Invention]

Hereinafter, the present specification will be described in detail with reference to Examples for specifically describing the present specification. However, the Examples according to the present specification may be modified in various forms, and it is not interpreted that the scope of the present application is limited to the Examples described in detail below. The Examples of the present application are provided to explain the present specification more completely to a person with ordinary skill in the art.

**<Preparation Example 1> Preparation of composition for polymerizing high refractive index resin**

A composition for polymerizing a high refractive index resin was prepared using the monomer composition shown in the following Table 1, and then mixed with 30 g of xylene to prepare a solution of a composition for polymerizing a high refractive index resin.

Specifically, the monomers for polymerizing a high refractive index resin were mixed in the mole percentages shown in the following Table 1 based on 1 mole of the entire monomers.

[Table 1]

| | Monomer for polymerizing high refractive index resin | | | |
|---|---|---|---|---|
| | CTHI | PMI | CMI | CHVE |
| Preparation Example 1 | 4 | 72 | 4 | 20 |
| Preparation Example 2 | 5 | 75 | - | 20 |
| Comparative Preparation Example 1 | 100 | - | - | - |

(continued)

| | Monomer for polymerizing high refractive index resin | | | |
|---|---|---|---|---|
| | CTHI | PMI | CMI | CHVE |
| Comparative Preparation Example 2 | - | 50 | 50 | - |
| Comparative Preparation Example 3 | - | - | 100 | - |

The structures of the compounds used as the monomer are as follows:

CTHI PMI CMI CHVE

**<Preparation Example 2> Preparation of high refractive index resin powder**

The solution of the composition for polymerizing a high refractive index resin prepared in Preparation Example 1 was dissolved at 80°C in a nitrogen atmosphere, and then heated to 120°C, and then an ABCN solution was added dropwise thereto, and the resulting mixture was reacted for 20 hours.

As the ABCN solution, an ABCN solution prepared by mixing 0.1 mole% of 1,1'-azobis(cyclohexanecarbonitrile) (ABCN) based on 1 mole of the entire monomers for polymerizing a high refractive index resin with 30 g of xylene was used.

After the reaction was completed, xylene was added to the reactor to dilute the resulting mixture to 10 to 20 wt%, and the mixture was precipitated in methanol and filtered to obtain a high refractive index resin.

The obtained high refractive index resin was vacuum dried in a vacuum oven at 80°C for 24 hours to prepare a high refractive index resin powder.

**<Experimental Example> Evaluation of high refractive index resin characteristics**

(1) Number average molecular weight (Mn), weight average molecular weight (Mw) and molecular weight distribution (PDI)

The molecular weight and molecular weight distribution of the high refractive index resin sample were confirmed through gel permeation chromatography (GPC), and a thermogram was obtained using a differential scanning calorimeter (DSC) to investigate the thermal characteristics.

For the molecular weight through gel permeation chromatography (GPC), results were obtained by injecting a solution produced by using tetrahydrofuran (THF, stabilized without butylated hydroxytoluene (BHT)) as a solvent, dissolving the sample in tetrahydrofuran at a concentration of 1.0 mg/1 ml, filtering the dissolved sample with a syringe filter, and measuring the molecular weight at 40°C, and the results are shown in the following Table 2. A Waters RI detector was used, and two Agilent PLgel MIXED-B columns were used.

(2) Refractive Index (RI) and Abbe's Number

**[0165]** The measurement of the refractive index may be confirmed from a high refractive index resin sample, and the resulting value according to the wavelength of light was obtained using a prism-coupler.

After the sample was brought into close contact with a prism of a prism-coupler, light at a specific wavelength was made incident on the sample through the prism. Thereafter, after an incident angle at which light resonates was measured to measure a refractive index therefrom, the Sellmeier Coefficient which minimizes the error value was obtained and substituted into the Sellmeier's equation, and then a refractive index at a wavelength of D (587 nm) was confirmed.

Specifically, the refractive index was measured at a wavelength of 587 nm, and the Abbe's Number was obtained by the following Equation by measuring the refractive index (nD, nF, and nC) at a wavelength of D (587 nm), F (486 nm), and C (656 nm), respectively, and is shown in the following Table 2.

$$\text{Abbe's Number} = (nD-1)/(nF - nC)$$

(3) Glass transition temperature (Tg)

A differential scanning calorimeter (DSC) was measured to determine the glass transition temperature (Tg) of the resin. A glass transition temperature (Tg) was obtained on a graph obtained by heating 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 2.

[Table 2]

| | High refractive index resin composition | Mn (g/mol) | Mw (g/mol) | PDI | RI (587nm) | Abbe's Number | Tg (°C) |
|---|---|---|---|---|---|---|---|
| Example 1 | Preparation Example 1 | 7,100 | 35,000 | 4.93 | 1.585 | 29.9 | 172 |
| Example 2 | Preparation Example 2 | 6,800 | 31,000 | 4.56 | 1.592 | 29.1 | 140 |
| Comparative Example 1 | Comparative Preparation Example 1 | Molecular weight 1,000 or less (cannot be polymerized) | | | | | |
| Comparative Example 2 | Comparative Preparation Example 2 | 16,700 | 82,000 | 4.91 | 1.555 | 31.6 | 158 |
| Comparative Example 3 | Comparative Preparation Example 3 | 31,000 | 140,000 | 4.52 | 1.526 | 36.1 | 151 |

From the results in Table 2, it can be confirmed that the refractive index of the high refractive index resin polymerized using the composition for polymerizing a high refractive index resin of the present invention is excellent.

Specifically, it was confirmed that the refractive indices of Examples 1 and 2 were 1.56 or more, which were shown to be higher than those of the Comparative Example groups, and the molecular weights were also within the ranges that provided optimal fluidity and processability. In addition, by having an Abbe's Number and glass transition temperature

within the appropriate range, heat resistance and injection properties are excellent, and when the composition is applied to molded articles, it is possible to exhibit effects with little dispersion and high clarity. That is, in the case of a high refractive index resin prepared from the composition for polymerizing a high refractive index resin of the present invention, it is possible to provide a small optical material having excellent optical characteristics and a thin thickness.

In the case of Comparative Example 1, a resin was prepared by polymerization using only the first compound of Chemical Formula 1, but the molecular weight was 1,000 or less, and polymerization could not be achieved. That is, it was confirmed that a resin consisting only of units derived from the first compound cannot be prepared.

It was confirmed that Comparative Examples 2 and 3 are resins prepared by polymerizing a composition including one or two types of the third compounds represented by Chemical Formula 3, but not the first compound represented by Chemical Formula 1, and the refractive index was lower than that of the Example group. Specifically, it could be seen that Comparative Examples 2 and 3 did not exhibit excellent birefringence characteristics because they did not include the first unit of the present invention.

## Claims

**1.** A composition for polymerizing a high refractive index resin, comprising:

a first compound represented by the following Chemical Formula 1; and
one or more types of a second compound represented by the following Chemical Formula 2 and a third compound represented by the following Chemical Formula 3:

[Chemical Formula 1]

O
N
O
R1

[Chemical Formula 2]

X
Z
R2

[Chemical Formula 3]

wherein, in Chemical Formulae 1 to 3,
R1 is an alkyl group unsubstituted or substituted with an aryl group or a heteroaryl group; a cycloalkyl group unsubstituted or substituted with an alkyl group; or an aryl group,
R2 and R3 are each independently an alkyl group unsubstituted or substituted with an aryl group or a heteroaryl group; a cycloalkyl group unsubstituted or substituted with an alkyl group; or an aryl group,
Z is a direct bond; -O-; or -COO-, and
X is hydrogen; or an alkyl group.

**2.** The composition of claim 1, wherein R1 is a methyl group substituted with an aryl group or a heteroaryl group; a cyclopentyl group unsubstituted or substituted with an alkyl group; a cyclohexyl group unsubstituted or substituted with an alkyl group; a phenyl group; a biphenyl group; a naphthyl group; or a fluorenyl group.

**3.** The composition of claim 1, wherein a content of the first compound with respect to 100 parts by mole of the entire composition for polymerizing a high refractive index resin is 1 part by mole or more and 50 parts by mole or less.

**4.** The composition of claim 1, wherein the composition comprises: the second compound; and one or more types of the third compounds.

**5.** The composition of claim 1, wherein the first compound is selected from the following compounds:

.

6. The composition of claim 1, wherein the second compound is selected from the following compounds:

.

7. The composition of claim 1, wherein the third compound is selected from the following compounds:

.

8. The composition of claim 1, further comprising a fourth compound represented by the following Chemical Formula 4:

[Chemical Formula 4]

in Chemical Formula 4,
R4 and R5 are each independently an alkyl group unsubstituted or substituted with an aryl group or a heteroaryl group; a cycloalkyl group unsubstituted or substituted with an alkyl group; or an aryl group.

**9.** A method for preparing a high refractive index resin, the method comprising: polymerizing the composition according to claim 1.

**10.** The method of claim 9, wherein the composition further comprises a fourth compound represented by the following Chemical Formula 4:

[Chemical Formula 4]

in Chemical Formula 4,
R4 and R5 are each independently an alkyl group unsubstituted or substituted with an aryl group or a heteroaryl group; a cycloalkyl group unsubstituted or substituted with an alkyl group; or an aryl group.

**11.** A high refractive index resin comprising: a first unit represented by the following Chemical Formula 11; and

one or more of a second unit represented by the following Chemical Formula 12 and a third unit represented by the following Chemical Formula 13:

[Chemical Formula 11]

[Chemical Formula 12]

[Chemical Formula 13]

O
N
O
R31

wherein, in Chemical Formulae 11 to 13,
* means a moiety linked to the main chain of the resin,
R11 is an alkyl group unsubstituted or substituted with an aryl group or a heteroaryl group; a cycloalkyl group unsubstituted or substituted with an alkyl group; or an aryl group,
R21 and R31 are each independently an alkyl group unsubstituted or substituted with an aryl group or a heteroaryl group; a cycloalkyl group unsubstituted or substituted with an alkyl group; or an aryl group,
Z1 is a direct bond; -O-; or -COO-, and
X1 is hydrogen; or an alkyl group.

**12.** The high refractive index resin of claim 11, further comprising a fourth unit represented by the following Chemical Formula 14:

[Chemical Formula 14]

in Chemical Formula 14,
R41 and R51 are each independently an alkyl group unsubstituted or substituted with an aryl group or a heteroaryl group; a cycloalkyl group unsubstituted or substituted with an alkyl group; or an aryl group.

**13.** The high refractive index resin of claim 11, wherein a refractive index of the high refractive index resin, measured at a wavelength of 587 nm, is 1.56 or more and 1.80 or less.

**14.** The high refractive index resin of claim 11, wherein the high refractive index resin has a weight average molecular weight of 20,000 g/mol or more and 500,000 g/mol or less.

**15.** An article comprising the high refractive index resin of any one of claims 11 to 14.

## Patentansprüche

**1.** Zusammensetzung zur Polymerisierung eines Harzes mit hohem Brechungsindex, umfassend:

eine erste Verbindung, die dargestellt ist durch die folgende chemische Formel 1; und
eine oder mehrere Arten einer zweiten Verbindung, die dargestellt ist durch die folgende chemische Formel 2, und einer dritten Verbindung, die dargestellt ist durch die folgende chemische Formel 3:

[Chemische Formel 1]

[Chemische Formel 2]

[Chemische Formel 3]

O
N
O
R3

worin in den chemischen Formeln 1 bis 3
R1 eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe ist,
R2 und R3 jeweils unabhängig eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe sind,
Z eine direkte Bindung; -O-; oder -COO- ist, und
X Wasserstoff oder eine Alkylgruppe ist.

**2.** Zusammensetzung gemäß Anspruch 1, worin R1 eine Methylgruppe, die mit einer Arylgruppe oder einer Heteroarylgruppe substituiert ist; eine Cyclopentylgruppe, die unsubstituiert oder mit einer Alkylgruppe substituiert ist; eine Cyclohexylgruppe, die unsubstituiert oder mit einer Alkylgruppe substituiert ist; eine Phenylgruppe; eine Biphenylgruppe; eine Naphthylgruppe; oder eine Fluorenylgruppe ist.

**3.** Zusammensetzung gemäß Anspruch 1, wobei der Gehalt der ersten Verbindung, bezogen auf 100 Molteile der gesamten Zusammensetzung zur Polymerisierung eines Harzes mit hohem Brechungsindex, 1 Molteil oder mehr und 50 Molteile oder weniger beträgt.

**4.** Zusammensetzung gemäß Anspruch 1, wobei die Zusammensetzung umfasst: die zweite Verbindung; und eine oder mehrere Arten der dritten Verbindungen.

**5.** Zusammensetzung gemäß Anspruch 1, wobei die erste Verbindung ausgewählt ist aus den folgenden Verbindungen:

6. Zusammensetzung gemäß Anspruch 1, wobei die zweite Verbindung ausgewählt ist aus den folgenden Verbindungen:

H
O
O
N

7. Zusammensetzung gemäß Anspruch 1, wobei die dritte Verbindung ausgewählt ist aus den folgenden Verbindungen:

.

8. Zusammensetzung gemäß Anspruch 1, ferner umfassend eine vierte Verbindung, die dargestellt ist durch die folgende chemische Formel 4:

[Chemische Formel 4]

worin in der chemischen Formel 4
R4 und R5 jeweils unabhängig eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe sind.

9. Verfahren zur Herstellung eines Harzes mit hohem Brechungsindex, wobei das Verfahren umfasst: Polymerisieren der Zusammensetzung gemäß Anspruch 1.

10. Verfahren gemäß Anspruch 9, wobei die Zusammensetzung ferner eine vierte Verbindung umfasst, die dargestellt ist durch die folgende chemische Formel 4:

[Chemische Formel 4]

worin in der chemischen Formel 4
R4 und R5 jeweils unabhängig eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe sind.

**11.** Harz mit hohem Brechungsindex, umfassend: eine erste Einheit, die dargestellt ist durch die folgende chemische Formel 11; und

eines oder mehrere aus einer zweiten Einheit, die dargestellt ist durch die folgende chemische Formel 12, und einer dritten Einheit, die dargestellt ist durch die folgende chemische Formel 13:

[Chemische Formel 11]

R11

[Chemische Formel 12]

X1
Z1
R21

[Chemische Formel 13]

worin in den chemischen Formeln 11 bis 13

* eine an die Hauptkette des Harzes gebundene Gruppe bedeutet,

R11 eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe ist,

R21 und R31 jeweils unabhängig eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe sind,

Z1 eine direkte Bindung; -O-; oder -COO- ist, und

X1 Wasserstoff oder eine Alkylgruppe ist.

**12.** Harz mit hohem Brechungsindex gemäß Anspruch 11, ferner umfassend eine vierte Einheit, die dargestellt ist durch die folgende chemische Formel 14:

[Chemische Formel 14]

worin in der chemischen Formel 14

R41 und R51 jeweils unabhängig eine Alkylgruppe, die unsubstituiert oder mit einer Arylgruppe oder einer Heteroarylgruppe substituiert ist; eine Cycloalkylgruppe, die unsubstituiert oder mit einer Alkylgruppe substituiert ist; oder eine Arylgruppe sind.

**13.** Harz mit hohem Brechungsindex gemäß Anspruch 11, wobei der Brechungsindex des Harzes mit hohem Brechungsindex, gemessen bei einer Wellenlänge von 587 nm, 1,56 oder mehr und 1,80 oder weniger beträgt.

**14.** Harz mit hohem Brechungsindex gemäß Anspruch 11, wobei das Harz mit hohem Brechungsindex ein gewichtsmittleres Molekulargewicht von 20.000 g/mol oder mehr und 500.000 g/mol oder weniger aufweist.

**15.** Gegenstand, umfassend das Harz mit hohem Brechungsindex gemäß mindestens einem der Ansprüche 11 bis 14.

## Revendications

**1.** Composition pour la polymérisation d'une résine à indice de réfraction élevé, comprenant :

un premier composé représenté par la Formule Chimique 1 suivante ; et
un ou plusieurs types d'un deuxième composé représenté par la Formule Chimique 2 suivante et d'un troisième composé représenté par la Formule Chimique 3 suivante :

[Formule Chimique 1]

[Formule Chimique 2]

[Formule Chimique 3]

dans laquelle, dans les formules chimiques 1 à 3,
R1 est un groupe alkyle non substitué ou substitué par un groupe aryle ou un groupe hétéroaryle ; un groupe cycloalkyle non substitué ou substitué par un groupe alkyle ; ou un groupe aryle,
R2 et R3 sont chacun indépendamment un groupe alkyle non substitué ou substitué par un groupe aryle ou un groupe hétéroaryle ; un groupe cycloalkyle non substitué ou substitué par un groupe alkyle ; ou un groupe aryle,
Z est une liaison directe ; -O- ; ou -COO-, et
X est un hydrogène ; ou un groupe alkyle.

**2.** Composition selon la revendication 1, dans laquelle R1 est un groupe méthyle substitué par un groupe aryle ou un groupe hétéroaryle ; un groupe cyclopentyle non substitué ou substitué par un groupe alkyle ; un groupe cyclohexyle non substitué ou substitué par un groupe alkyle ; un groupe phényle ; un groupe biphényle ; un groupe naphtyle ; ou un groupe fluorényle.

3. Composition selon la revendication 1, dans laquelle une teneur du premier composé par rapport à 100 parties en mole de la composition entière pour la polymérisation d'une résine à indice de réfraction élevé est de 1 partie en mole ou plus et de 50 parties en mole ou moins.

4. Composition selon la revendication 1, dans laquelle la composition comprend : le deuxième composé ; et un ou plusieurs types des troisièmes composés.

5. Composition selon la revendication 1, dans laquelle le premier composé est sélectionné parmi les composés suivants :

6. Composition selon la revendication 1, dans laquelle le deuxième composé est sélectionné parmi les composés suivants :

H
O
O
N

**7.** Composition selon la revendication 1, dans laquelle le troisième composé est sélectionné parmi les composés suivants :

**8.** Composition selon la revendication 1, comprenant en outre un quatrième composé représenté par la Formule Chimique 4 suivante :

[Formule Chimique 4]

dans la Formule Chimique 4,
R4 et R5 sont chacun indépendamment un groupe alkyle non substitué ou substitué par un groupe aryle ou un groupe hétéroaryle ; un groupe cycloalkyle non substitué ou substitué par un groupe alkyle ; ou un groupe aryle.

**9.** Procédé de préparation d'une résine à indice de réfraction élevé, le procédé comprenant : la polymérisation de la composition selon la revendication 1.

**10.** Procédé selon la revendication 9, dans lequel la composition comprend en outre un quatrième composé représenté par la Formule Chimique 4 suivante :

[Formule Chimique 4]

dans la Formule Chimique 4,
R4 et R5 sont chacun indépendamment un groupe alkyle non substitué ou substitué par un groupe aryle ou un groupe hétéroaryle ; un groupe cycloalkyle non substitué ou substitué par un groupe alkyle ; ou un groupe aryle.

**11.** Résine à indice de réfraction élevé, comprenant : un premier motif représenté par la Formule Chimique 11 suivante ; et

un ou plusieurs parmi un deuxième motif représenté par la Formule Chimique 12 suivante et un troisième motif représenté par la Formule Chimique 13 suivante :

[Formule Chimique 11]

[Formule Chimique 12]

[Formule Chimique 13]

dans laquelle, dans les formules chimiques 11 à 13,
* désigne une fraction liée à la chaîne principale de la résine,
R11 est un groupe alkyle non substitué ou substitué par un groupe aryle ou un groupe hétéroaryle ; un groupe cycloalkyle non substitué ou substitué par un groupe alkyle ; ou un groupe aryle,
R21 et R31 sont chacun indépendamment un groupe alkyle non substitué ou substitué par un groupe aryle ou un groupe hétéroaryle ; un groupe cycloalkyle non substitué ou substitué par un groupe alkyle ; ou un groupe aryle,
Z1 est une liaison directe ; -O- ; ou -COO-, et
X1 est un hydrogène ; ou un groupe alkyle.

**12.** Résine à indice de réfraction élevé selon la revendication 11, comprenant en outre un quatrième motif représenté par la Formule Chimique suivante 14 :

[Formule Chimique 14]

dans la Formule Chimique 14,
R41 et R51 sont chacun indépendamment un groupe alkyle non substitué ou substitué par un groupe aryle ou un groupe hétéroaryle ; un groupe cycloalkyle non substitué ou substitué par un groupe alkyle ; ou un groupe aryle.

**13.** Résine à indice de réfraction élevé selon la revendication 11, dans laquelle un indice de réfraction de la résine à indice de réfraction élevé, mesuré à une longueur d'onde de 587 nm, est de 1,56 ou plus et de 1,80 ou moins.

**14.** Résine à indice de réfraction élevé selon la revendication 11, dans laquelle la résine à indice de réfraction élevé présente une masse molaire moyenne en poids de 20 000 g/mole ou plus et de 500 000 g/mole ou moins.

**15.** Article comprenant la résine à indice de réfraction élevé selon l'une quelconque des revendications 11 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230120901
- KR 1020240124003
- KR 20160067229
- JP 7233158 B